# FASCICULE DE BREVET EUROPEEN

(11) **EP 3 053 353 B1**
(45) Date de publication et mention de la délivrance du brevet: **26.10.2022**
(21) Numéro de dépôt: 14784315.5
(22) Date de dépôt: 19.09.2014
(51) Int. Cl.: H04Q 11/00, H04J 14/02

(54) **PROCÉDÉ DE TRANSMISSION DE DONNÉES DANS UN RÉSEAU OPTIQUE À LONGUEURS D'ONDES ENTRELACÉES DANS LE DOMAINE TEMPOREL**
VERFAHREN ZUR DATENÜBERTRAGUNG IN EINEM OPTISCHEN TDW-VERSCHACHTELTEN NETZWERK
METHOD FOR TRANSMITTING DATA IN A TIME-DOMAIN WAVELENGTH-INTERLEAVED OPTICAL NETWORK

(30) Priorité: 30.09.2013 FR 1359449
(43) Date de publication de la demande: 10.08.2016
(73) Titulaire: Orange, 92130 Issy-les-Moulineaux (FR)
(72) Inventeur: JOBERT, Sébastien, San Jose, CA 95129 (US); TRIKI, Ahmed, 29200 Brest (FR); GAVIGNET, Paulette, F-22730 Trégastel (FR); ARZUR, Bernard, F-22300 Lannion (FR); LE ROUZIC, Esther, F-22560 Trébeurden (FR)
(74) Mandataire: Regimbeau
(86) Numéro de dépôt international: PCT/FR2014/052337
(87) Numéro de publication internationale: WO 2015/044567

(56) Documents cités:
- WO-A1-2012/022884
- WO-A1-2012/022884
- US-A1- 2005 190 770
- US-A1- 2005 190 770
- AHMED TRIKI ET AL: "Efficient control plane for passive optical burst switching network", INFORMATION NETWORKING (ICOIN), 2013 INTERNATIONAL CONFERENCE ON, IEEE, 28 janvier 2013 (2013-01-28), pages 535-540, XP032357044, DOI: 10.1109/ICOIN.2013.6496682 ISBN: 978-1-4673-5740-1
- POPESCU ION ET AL: "Synchronization of the Time-domain Wavelength Interleaved Networks", 2013 15TH INTERNATIONAL CONFERENCE ON TRANSPARENT OPTICAL NETWORKS (ICTON), IEEE, 23 juin 2013 (2013-06-23), pages 1-4, XP032484003, ISSN: 2161-2056, DOI: 10.1109/ICTON.2013.6602998 [extrait le 2013-09-17]
- AHMED TRIKI ET AL: "Efficient control plane for passive optical burst switching network", INFORMATION NETWORKING (ICOIN), 2013 INTERNATIONAL CONFERENCE ON, IEEE, 28 January 2013 (2013-01-28), pages 535-540, XP032357044, DOI: 10.1109/ICOIN.2013.6496682 ISBN: 978-1-4673-5740-1
- POPESCU ION ET AL: "Synchronization of the Time-domain Wavelength Interleaved Networks", 2013 15TH INTERNATIONAL CONFERENCE ON TRANSPARENT OPTICAL NETWORKS (ICTON), IEEE, 23 June 2013 (2013-06-23), pages 1-4, XP032484003, ISSN: 2161-2056, DOI: 10.1109/ICTON.2013.6602998 Retrieved from the Internet: URL:https://ieeexplore.ieee.org/document/6 602998 [retrieved on 2013-09-17]

## Description

### DOMAINE GENERAL

L'invention se rapporte au domaine des réseaux de communications optiques, et plus particulièrement au domaine des réseaux tout optique à longueurs d'onde entrelacées dans le domaine temporel.

### ETAT DE L'ART

Les données transportées dans les réseaux de télécommunication sont de plus en plus de nature « paquet » même si les réseaux de transport optiques fonctionnent en mode circuit. Les bénéfices potentiels de l'introduction de la commutation de paquets dans le domaine optique, évitant ainsi les conversions optique-électrique-optique coûteuses et gourmandes en énergie, ont été étudiés depuis des années.

Le concept de commutation optique de rafales de données (ou « Optical Burst Switching », abrégé en OBS) a été introduit en 1999 par C.M. Qiao et J.S. Yoo pour compenser le manque de flexibilité des réseaux optiques à commutation de circuits et l'immaturité des techniques de commutation de paquets optiques (OPS). Cette solution a notamment été poussée par l'augmentation des volumes de trafic et la généralisation du protocole de communication IP, se traduisant par un trafic de plus en plus sporadique de nature « paquet ».

Contrairement à la commutation optique de paquets, l'OBS consiste à rassembler un certain nombre de paquets destinés à un même nœud destinataire d'un réseau optique dans un même groupe dénommé dans la suite rafale de données, et transmettre cette rafale de données au nœud destinataire.

Ce type de transport de données permet de relâcher les contraintes techniques (vitesse de traitement) au niveau des nœuds, les rafales étant de durée plus longue que les paquets IP natifs. Comme la durée des rafales reste faible (quelques microsecondes à quelques millisecondes), la technique OBS permet un multiplexage statistique significatif qui améliore le remplissage des canaux. De ce point de vue, l'OBS est un bon compromis entre complexité technique et performance.

Le transfert de rafales de données dans un réseau optique est assuré par une réservation et une configuration de nœuds intermédiaires, de proche en proche dans chaque nœud, grâce à des paquets de contrôle ou des en-têtes (ou labels). Afin d'optimiser l'occupation des fibres optiques et des longueurs d'onde, le réseau OBS est configuré pour éviter les collisions dans les nœuds intermédiaires entre des rafales qui souhaiteraient accéder à un même port de sortie de ce nœud en même temps. Ces solutions consistent à utiliser les domaines temporel, spectral ou spatial pour résoudre les contentions et ainsi éviter les collisions de rafales à l'intérieur du nœud.

Outre la capacité des rafales de données optiques à améliorer l'efficacité des réseaux de transport, on espère des techniques OBS une réduction forte de la consommation électrique de ces réseaux. Cette réduction est justifiée par le fait qu'idéalement, les rafales de données sont aiguillées dans les réseaux OBS de manière transparente, c'est-à-dire sans aucun traitement électronique, et que seul le traitement de paquets de contrôle y est éventuellement effectué.

Dans l'idée d'assurer un aiguillage passif au niveau des nœuds cœur, des travaux ont proposé un dérivé de l'OBS conventionnel appelé « Time-domain Wavelength Interleaved Networking » en anglais, et communément abrégé en TWIN, ce qui peut être traduit littéralement par « réseau à longueurs d'ondes entrelacées dans le domaine temporel ».

Dans un réseau TWIN, chaque longueur d'onde est dédiée pour transporter des rafales de données vers un seul nœud destinataire, ce qui permet d'assurer un routage en longueur d'onde passif et transparent au niveau des nœuds intermédiaire et de simplifier le plan de commande du réseau. Le document US 2005/190770 A1 décrit un réseau de ce type.

L'approche TWIN permet de contourner certaines contraintes technologiques de l'OBS conventionnel (e.g. des contraintes liées à des éléments de commutation rapide de rafales dans les nœuds intermédiaires) mais n'affranchit pas de la nécessité de contrôler précisément la transmission de rafales de données entre des nœuds et soulève des questions quant à la façon de communiquer des informations relatives à un tel contrôle.

Un exemple de contrôle est l'ordonnancement des données émises par différents nœuds sources vers un même nœud destinataire. En effet, si l'ordonnancement n'est pas effectué correctement, des contentions sont possibles avec un réseau TWIN sur la longueur d'onde attribuée à un nœud destinataire.

A cet égard, il a été envisagé d'inclure dans un réseau TWIN une entité de contrôle centralisée contrôlant l'ordonnancement de rafales de données à destination d'une pluralité de nœuds destinataires. Une telle entité de commande gère toutes les réservations en attribuant à chaque nœud source des ressources à utiliser pour transmettre des rafales de données à une destination quelconque.

Cette approche centralisée présente toutefois de multiples inconvénients. D'une part, elle impose une contrainte d'ordre topologique forte (tout nœud source du réseau doit en effet être relié à l'entité de contrôle centralisée). Elle nécessite en outre la mise en œuvre d'algorithmes de réservation très complexes dans l'entité centralisée et induit de nombreuses latences (e.g. en termes de temps de calcul, de temps de signalisation ou d'échanges de messages).

Il a par ailleurs été envisagé de transporter des données de contrôle dans un réseau TWIN à l'aide d'un réseau opaque (c'est-à-dire où les nœuds intermédiaires doivent procéder à une conversion optique-électrique-optique afin d'éviter les contentions des messages de contrôle) qui relie tous les nœuds et qui utilise une longueur d'onde de contrôle dédiée (c'est-à-dire une longueur d'onde qui n'est pas utilisée par des nœuds destinataires).

Cette approche a cependant pour inconvénient la nécessité de dédier une longueur d'onde à ce canal de contrôle partagé, ce qui implique un nombre de messages important à traiter sur une même longueur d'onde.

De ce fait, le réseau résultant n'est pas tout-optique, et par conséquent consommateur en énergie pour les messages du plan de commande, ce qui peut conduire à une latence plus importante pour le plan de commande, et peut poser des problèmes éventuels de passage à l'échelle.

### PRESENTATION DE L'INVENTION

Un but à atteindre est donc celui de mettre en œuvre des opérations de contrôle relatives à la transmission de rafales de données dans un réseau TWIN, et ce de manière purement optique. Un autre but à atteindre est celui de mettre en œuvre la transmission de telles informations de contrôle sans requérir de longueur d'onde supplémentaire.

A cet égard, et selon un premier aspect, il est proposé un procédé de transmission de données à travers un réseau optique comprenant une pluralité de nœuds optiques, dans lequel au moins une longueur d'onde est dédiée à la transmission dans le réseau de rafales de données émises par au moins un desdits nœuds, dit nœud source, à destination d'un desdits nœuds, dit nœud destinataire, le procédé étant caractérisé en ce qu'il comprend la transmission d'un message de contrôle depuis ledit nœud destinataire vers ledit au moins un nœud source, le message de contrôle étant transporté dans un signal optique émis selon ladite longueur d'onde dédiée à la transmission dans le réseau de rafales de données à destination dudit nœud destinataire.

Un tel procédé permet d'offrir de la capacité supplémentaire de signalisation dans le plan de contrôle d'un réseau TWIN sans avoir besoin de recourir ni à l'ajout de longueurs d'onde de signalisation supplémentaires, ni à la réservation d'une longueur d'onde opaque commune dans le réseau, en réutilisant au niveau du plan de contrôle des longueurs d'onde déjà utilisées dans le plan de transfert. D'autre part, elle permet d'utiliser de manière judicieuse de la bande passante d'ordinaire non utilisée dans un réseau TWIN classique, dans lequel seul le sens feuille vers racine est utilisé pour transmettre des données selon la longueur d'onde de transfert.

Le message de contrôle peut être un message d'autorisation d'émission d'une rafale de données, et le procédé selon le premier aspect comprendre en outre l'émission de ladite rafale de données, par ledit au moins un nœud source à destination du nœud destinataire, dans un signal optique émis selon ladite longueur d'onde.

Ce message d'autorisation permet une gestion à distance de l'émission des rafales, contrôlée par le nœud destinataire de ces rafales, dans un plan de contrôle optimisé en termes de ressources optiques utilisées.

Le message d'autorisation d'émission peut contenir au moins une information d'ordonnancement déterminée par le nœud destinataire, la rafale de données étant émise par le nœud source à un instant déterminé par le nœud source à partir de l'information d'ordonnancement.

L'information d'ordonnancement permet une gestion précise de l'ordonnancement des rafales de données destinées à un nœud destinataire, afin de prévenir des collisions entre ces rafales dans son arbre de transfert, d'une manière optimale en termes de capacités de signalisation. Par ailleurs, le fait de confier de façon distribuée le contrôle de l'ordonnancement de rafales de données aux nœuds destinataires de ces rafales de données est beaucoup plus simple à réaliser que de confier ce contrôle à une entité tierce ; chaque nœud destinataire n'a en effet qu'à générer un nombre restreint de messages de contrôle.

Le procédé de transmission selon le premier aspect peut également comprendre une étape de transmission d'un message de requête du nœud source au nœud destinataire, le message d'autorisation d'émission étant émis par le nœud destinataire après réception du message de requête par le nœud destinataire.

Le message de requête peut en outre être transporté dans un signal optique émis par le nœud source selon une longueur d'onde dédiée à la transmission de rafales de données à destination du nœud source dans le réseau, afin de gérer les échanges de signalisation bidirectionnels effectués lors d'un processus de transmission de rafales de données, dans un plan de contrôle optimisé en termes de ressources optiques utilisées.

La longueur d'onde peut par ailleurs être dédiée à la transmission dans le réseau de rafales de données émises par une pluralité de nœuds source, et dans lequel le message de contrôle est un message de synchronisation comprenant une référence temporelle déterminée par le nœud destinataire pour synchroniser les transmissions de rafales de données depuis lesdits nœuds sources vers le nœud destinataire.

Ceci permet de gérer la synchronisation entre nœuds dans un plan de contrôle optimisé en termes de ressources optiques utilisées. Les nœuds intermédiaires du réseau TWIN n'ayant pas eux-mêmes besoin d'être synchronisés, puisqu'ils ne participent qu'à l'acheminement de l'information de synchronisation vers les nœuds sources, et ce de façon passive et transparente, une telle solution limite les contraintes liées à la synchronisation des nœuds intermédiaires.

Le message de contrôle peut en outre comprendre une pluralité de bits, le message de contrôle étant émis de sorte que lesdits bits soient porteurs d'un rythme de référence destiné à être utilisé par ledit au moins un nœud source. Il est ainsi possible de distribuer une horloge de référence vers un ensemble de nœuds du réseau, dans un plan de contrôle optimisé en termes de ressources optiques utilisées.

Selon un deuxième aspect, il est proposé un nœud optique, dit nœud destinataire, pour un réseau optique comprenant une pluralité de nœuds optiques, dans lequel au moins une longueur d'onde est dédiée à la transmission dans le réseau de rafales de données émises par au moins un desdits nœuds, dit nœud source, à destination dudit nœud destinataire, le nœud destinataire comprenant un module de réception de signaux optiques apte à recevoir lesdites rafales de données, le nœud destinataire étant caractérisé en ce qu'il comprend un module d'émission de signaux optiques, configuré pour émettre un message de contrôle vers ledit au moins un nœud source, le message de contrôle étant transporté dans un signal optique émis selon ladite longueur d'onde dédiée à la transmission dans le réseau de rafales de données à destination dudit nœud destinataire.

Selon un troisième aspect, il est aussi proposé un nœud optique, dit nœud source, pour un réseau optique comprenant une pluralité de nœuds optiques, dans lequel au moins une longueur d'onde est dédiée à la transmission dans le réseau de rafales de données émises par ledit nœud source à destination d'un desdits nœuds, dit nœud destinataire, le nœud source comprenant un module d'émission de signaux optiques apte à émettre des rafales de données vers ledit nœud destinataire selon ladite longueur d'onde, le nœud source étant caractérisé en ce qu'il comprend un module de réception de signaux optiques apte à recevoir un message de contrôle provenant dudit nœud destinataire, le message de contrôle étant transporté dans un signal optique émis selon ladite longueur d'onde dédiée à la transmission dans le réseau de rafales de données à destination dudit nœud destinataire.

Le module d'émission du nœud source peut être configuré en outre pour émettre vers le nœud destinataire un message de requête agencé pour déclencher l'émission du message de contrôle par le nœud destinataire.

Selon un quatrième aspect, il est proposé un nœud optique, dit nœud intermédiaire, pour un réseau optique comprenant une pluralité de nœuds optiques, dans lequel au moins une longueur d'onde est dédiée à la transmission dans le réseau de rafales de données émises par au moins un desdits nœuds, dit nœud source, à destination d'un desdits nœuds, dit nœud destinataire, le nœud intermédiaire comprenant des moyens de routage optique configurés pour acheminer vers le nœud destinataire une rafale de données transportée dans un signal optique émis par un nœud source selon ladite longueur d'onde, le nœud intermédiaire étant caractérisé en ce qu'il comprend en outre des premiers moyens de diffusion optique configurés pour acheminer vers ledit au moins un nœud source un message de contrôle transporté dans un signal optique émis par le nœud destinataire selon ladite longueur d'onde.

Le nœud intermédiaire peut en outre comprendre des deuxièmes moyens d'aiguillage configurés pour acheminer vers le nœud destinataire un message de requête transporté dans un signal optique émis par un nœud source selon une longueur d'onde dédiée à la transmission de rafales de données à destination dudit nœud source dans le réseau.

Selon un cinquième aspect, il est proposé un réseau optique de communication comprenant une pluralité de nœuds optiques, dans lequel au moins une longueur d'onde est dédiée à la transmission dans le réseau de rafales de données émises par au moins un desdits nœuds, dit nœud source, à destination d'un desdits nœuds, dit nœud destinataire, le réseau optique comprenant au moins un canal de transfert configuré pour acheminer lesdites rafales de données depuis ledit au moins un nœud source vers ledit nœud destinataire, le réseau optique étant caractérisé en ce qu'il comprend en outre au moins un canal de contrôle configuré pour acheminer au moins un message de contrôle depuis le nœud destinataire vers ledit au moins un nœud source au moyen d'un signal optique émis selon une longueur d'onde dédiée à la transmission de rafales de données à destination du nœud destinataire.

Le réseau optique selon ce cinquième aspect peut comprendre en outre au moins un nœud intermédiaire, appartenant au canal de transfert et au canal de contrôle, et apte à recevoir le signal optique transportant le message de contrôle en provenance du nœud destinataire et configuré pour acheminer ledit signal optique vers ledit au moins un nœud source.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1a représente le plan de transfert d'un réseau optique à longueurs d'ondes entrelacées dans le domaine temporel (TWIN) conventionnel ;
- La figure 1b illustre le trajet de données à destination d'un nœud destinataire du réseau illustré en figure 1a ;
- La figure 1c illustre le trajet de données à destination d'un autre nœud destinataire du réseau de la figure 1a ;
- La figure 2a représente un mode de réalisation selon la présente invention d'un plan de contrôle pour le réseau TWIN illustré sur la figure 1a ;
- La figure 2b illustre le trajet de messages de contrôle émis par le nœud destinataire de la figure 1b ;
- La figure 2c illustre le trajet de messages de contrôle à destination du nœud destinataire de la figure 1b ;
- La figure 3 représente schématiquement un nœud source et un nœud destinataire du réseau illustré sur les figures précédentes, selon un mode de réalisation ;
- La figure 4 représente schématiquement un mode de réalisation d'un nœud intermédiaire illustré sur les figures 1a à 2c ;
- La figure 5 présente les étapes d'un procédé de transmission de données, selon un mode de réalisation ; et
- Les figures 6 à 9 présentent chacune des sous-étapes d'une étape respective du procédé illustré en figure 5.
Sur l'ensemble des figures, les éléments similaires portent des références identiques.

### DESCRIPTION DETAILLEE DE L'INVENTION

Un réseau optique à longueurs d'ondes entrelacées dans le domaine temporel (TWIN) comprend au moins un nœud optique émetteur de rafales de données (appelé « nœud source ») et au moins un nœud optique récepteur de rafales de données (appelé « nœud destinataire »), un même nœud pouvant être à la fois source et destinataire de rafales de données. Dans la suite de cette demande, les termes « source » et« destinataire » se réfèrent implicitement au transport de rafales de données dans un plan dit « de transfert ».

Dans ce réseau TWIN, deux nœuds adjacents peuvent être directement reliés entre eux par un lien optique comprenant une ou plusieurs fibres optiques. Le réseau TWIN peut également comprendre au moins un nœud intermédiaire entre un nœud source et un nœud destinataire, chaque nœud intermédiaire étant configuré pour mettre en œuvre la technique de commutation passive de rafales de données décrite précédemment.

Par convention, on appelle « canal » une succession de liaisons optiques et/ou de nœuds intermédiaires distincts permettant d'acheminer un signal optique de longueur d'onde constante dans le réseau TWIN entre deux nœuds d'extrémité. De façon générale, un canal comprend deux nœuds d'extrémité, N nœuds intermédiaires distincts et N+1 liens optiques distincts, N étant supérieur ou égal à zéro (le cas N=0 correspondant au cas où les deux nœuds d'extrémités sont adjacents).

### Plan de transfert d'un réseau TWIN

On définit le « plan de transfert » d'un réseau TWIN comme étant l'ensemble des canaux de ce réseau dédiés au transport de rafales de données utiles.

Dans ce plan de transfert, à chaque nœud destinataire du réseau TWIN est associé un arbre de transfert définissant des canaux de transfert de rafales de données reliés à ce nœud destinataire dans le réseau TWIN. La racine de cet arbre de transfert représente donc un nœud destinataire, et chaque feuille de l'arbre représente un nœud source apte à transmettre, à un moment donné, des rafales de données vers ce nœud destinataire.

Les rafales de données sont ainsi transmises au nœud destinataire du réseau selon un sens « feuilles vers racine » (c'est-à-dire depuis au moins un nœud source vers le nœud destinataire) de l'arbre de transfert associé à ce nœud destinataire. En revanche, de manière conventionnelle dans ce type de réseau TWIN, le sens opposé « racine vers feuilles » de ces arbres de transfert n'est pas utilisé dans le plan de transfert (i.e. pour le transport de données utiles).

Une longueur d'onde dite « de transfert » est attribuée à chaque nœud destinataire du réseau TWIN (et donc associée indirectement à l'arbre de transfert associé à ce nœud destinataire) et utilisée pour transmettre des signaux optiques transportant des rafales données vers ce nœud destinataire selon cet arbre de transfert. Un réseau TWIN suppose par définition que les longueurs d'onde de transfert soient différentes pour chaque nœud destinataire. Ainsi, une même longueur d'onde n'est pas utilisée pour deux nœuds destinataires différents.

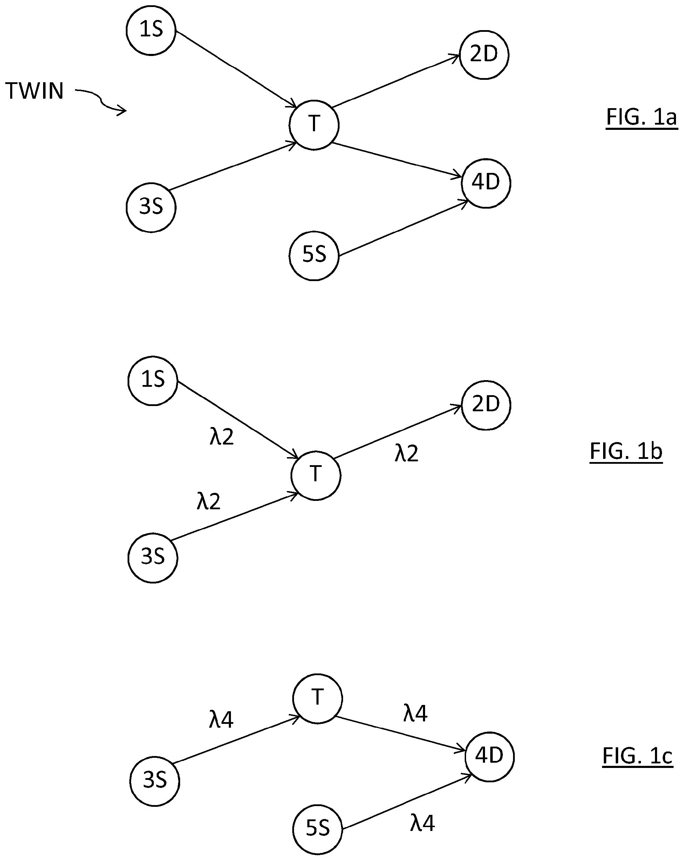

La **figure 1a** illustre le plan de transfert d'un réseau TWIN conventionnel. Ce réseau comprend :
- deux nœuds destinataires 2D, 4D (c'est-à-dire des nœuds qui reçoivent du trafic depuis des nœuds sources) auxquels sont attribuées respectivement des longueurs d'onde de transfert distinctes λ2 et λ4.
- trois nœuds sources 1S, 3S, 5S, c'est-à-dire des nœuds qui envoient des rafales de données vers des nœuds destinataires, en utilisant la longueur d'onde de transfert associée au nœud destinataire de ces données.
- un nœud intermédiaire T tout-optique dans le plan de transfert, qui n'a pour fonction que de transférer de façon passive des signaux optiques reçus.

Pour transmettre des données vers un nœud destinataire, un nœud source doit utiliser la longueur d'onde attribuée à ce nœud destinataire.

La **figure 1b** illustre ainsi l'arbre de transfert associé au nœud destinataire 2D, dans lequel les nœuds 1S et 3S transmettent des rafales de données vers le nœud 2D au moyen de signaux optiques de longueur d'onde λ2.

La **figure 1c** illustre l'arbre de transfert associé à l'autre nœud destinataire 4D, dans lequel les nœuds 3S et 5S transmettent des rafales de données vers le nœud 4D au moyen de signaux optiques de longueur d'onde A4.

On rappelle ici qu'un nœud peut être en pratique à la fois source et destinataire de rafales de données, bien que cela ne soit pas représenté sur les figures 1a à 1c, pour plus de simplicité.

### Mode de réalisation d'un plan de contrôle pour réseau TWIN

Par opposition au plan de transfert, dédié au transport de rafales de données utiles, on définit un plan de contrôle (ou plan de commande) d'un réseau TWIN comme étant l'ensemble des canaux dédiés au transport de messages de contrôle destinés à organiser le trafic des rafales de données utiles dans le plan de transfert.

Ce plan de contrôle peut transporter des messages dans le sens nœud destinataire vers nœud source, ainsi qu'éventuellement dans le sens nœud source vers nœud destinataire. Les messages de contrôle transmis peuvent par exemple être des messages de requête (« request » en anglais) ou des messages d'autorisation d'émission (« grant » en anglais), utilisés pour l'allocation de ressources optiques aux nœuds sources, comme il sera vu plus loin.

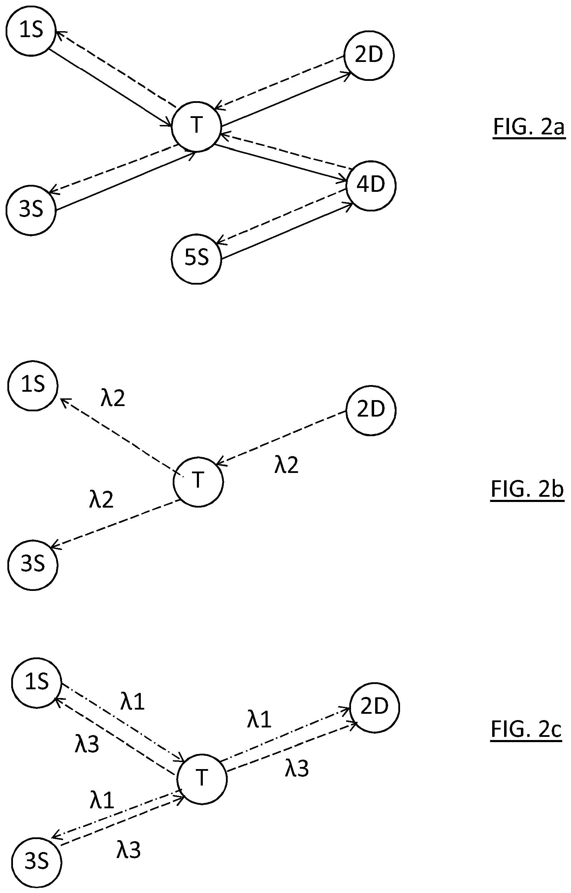

La **figure 2a** illustre un mode de réalisation selon la présente invention d'un tel plan de contrôle pour le réseau TWIN de la figure 1a, le transport de messages de contrôle dans les canaux de ce plan de contrôle étant représenté au moyen de lignes à tirets sur cette figure et les suivantes.

Afin de mettre en place de manière optimisée ce plan de contrôle, dans la présente invention, on réutilise le sens « racine vers feuilles », inutilisé par le plan de transfert, pour transmettre des messages de contrôle d'un nœud destinataire vers ses nœuds source dans son arbre de transfert.

En d'autres termes, les messages de contrôle émis par un nœud destinataire vers un nœud source sont transmis, dans le plan de contrôle, en réutilisant la longueur d'onde attribuée à ce nœud destinataire dans le plan de transfert (i.e. la longueur d'onde spécifiquement utilisée pour envoyer des rafales de données vers ce nœud destinataire), mais dans le sens opposé du sens utilisé par le plan de transfert.

Le plan de contrôle, tel qu'illustré en figure 2a, est alors constitué de canaux de contrôle adaptés pour transporter des messages de contrôle depuis chaque nœud destinataire de rafale de données vers les nœuds sources correspondants, dans le sens inverse au sens de transmission des rafales des données des arbres de transfert associés à chaque nœud destinataire du réseau.

Le plan de contrôle peut ainsi être représenté comme un ensemble d'arbres de contrôle associés à chaque nœud destinataire, dans lequel chaque arbre de contrôle correspond « topologiquement » à l'arbre de transfert associé à ce nœud destinataire dans le plan de transfert (i.e. il présente le même nœud « racine » et les mêmes nœuds « feuilles » que cet arbre de transfert), et où chaque longueur d'onde de transfert, attribuée initialement à un seul nœud destinataire dans le plan de transfert, peut être désignée comme étant une longueur d'onde de « contrôle » attribuée spécifiquement à ce même nœud destinataire pour la transmission de messages de contrôle de ce nœud destinataire vers les nœuds sources de cet arbre de contrôle.

En d'autres termes, chaque nœud destinataire se voit attribuer une même longueur d'onde pour, d'une part, émettre des messages de contrôle vers ses nœuds source dans le sens « racine vers feuilles » de son arbre de contrôle et pour, d'autre part, recevoir dans le plan de transfert des rafales de données émanant des nœuds source, dans le sens « feuilles vers racine » de son arbre de transfert, ces deux arbres se superposant topologiquement. Comme il sera expliqué ultérieurement, le sens « racine vers feuilles » peut aussi servir à transférer des messages de contrôle depuis ce nœud vers d'autres nœuds destinataires lorsque le nœud en question joue le rôle de nœud source.

La **figure 2b** illustre ainsi, en se référant au seul nœud destinataire 2D du réseau illustré en figure 1a, l'arbre de contrôle associé à ce nœud 2D.

Dans cet arbre de contrôle, topologiquement similaire à l'arbre de transfert illustré en figure 1b, les messages de contrôle émis par le nœud destinataire 2D sont véhiculés au moyen de signaux optiques selon la longueur d'onde λ2 à l'ensemble des nœuds sources de cet arbre, ici les nœuds 1S et 3S.

Dans cet exemple, un message de contrôle émis par un nœud destinataire est transmis à tous les nœuds sources de son arbre de contrôle. Cependant, ce message de contrôle peut n'être destiné qu'à un seul de ces nœuds sources. Afin de gérer cet aspect, les nœuds sources de l'arbre de contrôle possèdent avantageusement des moyens d'identification des messages de contrôle qui les concernent, capables par exemple de filtrer ces messages en fonction d'un identifiant désignant, ou non, le nœud source dans le message de contrôle émis par le nœud destinataire.

Le message de contrôle transmis d'un nœud destinataire à un nœud source peut notamment être un message d'autorisation d'émission d'une rafale de données, généré par le nœud destinataire après réception d'une requête d'émission lui signalant qu'une rafale de données qui lui est destinée est prête à l'envoi au niveau d'un des nœuds sources.

Afin de limiter le risque de collisions de rafales au niveau d'un nœud intermédiaire, voire du nœud destinataire, ce message d'autorisation d'émission peut contenir une information dite « d'ordonnancement » (désignant typiquement un intervalle de temps d'émission alloué au nœud source) contrôlant l'émission par le nœud source de la rafale de données destinée à ce nœud destinataire. La nature et la manière de générer cette information d'ordonnancement sont détaillées plus loin.

Comme indiqué précédemment, tout nœud source du réseau TWIN peut aussi être un nœud destinataire, avec une longueur d'onde qui lui est spécifiquement associée, dans le plan de transfert, pour la réception de rafales de données et un arbre de transfert, dans lequel ce nœud source est le « nœud racine », destinataire des rafales de données, et comprenant un certain nombre de « nœuds feuilles ».

Il est alors possible de réutiliser cette longueur d'onde, dans le plan de contrôle, pour l'envoi de messages de contrôle de ce nœud source vers de tel(s) nœud(s) destinataire(s), notamment lorsqu'il s'agit des messages de requêtes d'émission susmentionnés.

Ainsi, dans un mode de réalisation où il existe un premier arbre de transfert, dans lequel un premier nœud est un nœud source et un deuxième nœud est un nœud destinataire, et un deuxième arbre de transfert, dans lequel le premier nœud est un nœud destinataire et le deuxième nœud est un nœud source, non seulement le deuxième nœud peut utiliser la longueur d'onde qui lui est allouée dans le plan de transfert pour transmettre des messages de contrôle au premier nœud, mais le premier nœud peut également utiliser la longueur d'onde qui lui est allouée dans le plan de transfert pour transmettre des messages de contrôle au deuxième nœud, ce qui permet une signalisation bidirectionnelle entre ces nœuds réutilisant des longueurs d'onde de transfert, pour émettre des messages de contrôle dans le sens où elles ne sont pas utilisées dans le plan de transfert.

La **figure 2c** illustre ainsi un mode de réalisation pour la partie du plan de contrôle permettant aux nœuds sources 1S et 3S d'envoyer des messages de contrôle vers le nœud destination 2D. Dans ce mode de réalisation, les arbres de contrôle associés aux nœuds sources 1S et 3S utilisent respectivement les longueurs d'onde λ1 et λ3 pour le transport de messages de contrôle vers les nœuds destinataires de ces arbres, ces longueurs d'onde λ1 et λ3 étant les longueurs d'onde de transfert associées respectivement aux nœuds 1S et 3S pour l'envoi de rafales de données vers ces nœuds sources dans le plan de transfert.

Ainsi, les messages de contrôle émis par le nœud source 1S sont transmis vers les nœuds 3S et 2D en utilisant la longueur d'onde λ1 et les messages de contrôle émis par le nœud source 3S sont transmis vers les nœuds 1S et 2D en utilisant la longueur d'onde A3. Ces longueurs d'onde, attribuées initialement dans le plan de transfert, peuvent ainsi être réutilisées, dans le plan de contrôle, pour transmettre des messages de contrôle au nœud destinataire 2D.

Au travers des exemples des figures 2b et 2c, on voit bien que, lorsque le nœud 1S désire envoyer une rafale de données vers le nœud 2D, il peut envoyer un message de requête d'émission destiné à ce nœud 2D, au moyen d'un signal optique utilisant la longueur d'onde λ1 attribuée au nœud 1S pour recevoir des rafales de données dans le plan de transfert, et le nœud 2D peut lui répondre en lui retournant un message d'autorisation d'émission, au moyen d'un signal optique utilisant la longueur d'onde λ2 attribuée au nœud 2D pour recevoir des rafales de données dans le plan de transfert. Le plan de contrôle ainsi obtenu présente une topologie simple, calquée sur les plans de transfert.

Dans ce mode de réalisation, lorsqu'un nœud est à la fois source et destinataire de rafales de données, un multiplexage temporel des messages de contrôle envoyés par ce nœud sur son arbre de contrôle est avantageusement mis en œuvre, dans la mesure où ils utilisent la même longueur d'onde. En effet, le canal de contrôle créé dans le sens racine vers feuilles de cet arbre de contrôle peut transporter à la fois des messages d'autorisation d'émission, vers certains nœuds de cet arbre pouvant émettre de rafales vers ce nœud, et des messages de requête d'émission vers certains nœuds de cet arbre auquel ce nœud souhaite transmettre des rafales. Ainsi, en reprenant l'exemple de la figure 2b, la longueur d'onde λ2 est utilisée pour transporter à la fois les messages d'autorisation d'émission du nœud destinataire 2D vers les nœuds sources 1S et 3S, mais aussi les messages de requête d'émission du nœud 2D lorsque celui-ci souhaite envoyer des rafales de données vers l'un des nœuds 1S et 3S.

Dans une variante, les messages de requête dans le sens nœud source vers nœud destinataire peuvent être émis dans le plan de transfert. Dans ce cas, les rafales de données et les messages de contrôle transitent dans les mêmes fibres optiques, dans le même sens de transmission, en utilisant par exemple une technique de multiplexage temporel.

Cette topologie particulière de plan de contrôle permet de couvrir le cas où tous les nœuds extrémités du réseau TWIN ne sont pas nécessairement à la fois source et destinataire de rafales de données, tout en ne nécessitant pas l'utilisation de longueur d'onde supplémentaire dédiées au plan de contrôle dans le sens nœud source vers nœud destination.

### Mode de réalisation de nœud d'extrémité

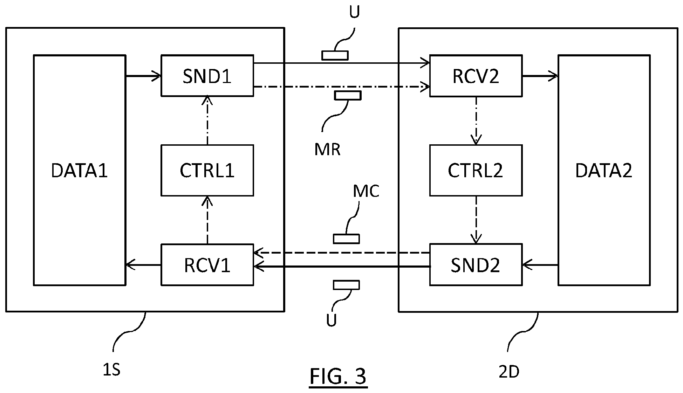

La **figure 3** illustre un nœud source et un nœud destinataire selon un mode de réalisation de l'invention.

Sur cette figure, les nœuds source 1S et destinataire 2D sont pris en exemple mais leur description peut être généralisée à l'ensemble des nœuds sources et/ou destinataires du réseau TWIN.

Le nœud source 1S comprend un module d'émission de signaux optiques SND1 et un module de réception de signaux optiques RCV1, ainsi qu'un module de traitement de données DATA1 et un module de contrôle esclave CTRL1 (typiquement mis en œuvre par un processeur associé à une mémoire dans laquelle est stockée un programme d'ordinateur comprenant des instructions de code pour le traitement de données, lorsqu'exécutées par ce processeur).

Le module d'émission SND1 est configuré pour émettre des signaux optiques sur au moins une liaison optique du réseau TWIN et selon au moins une longueur d'onde, à partir de données émanant du module de traitement de données DATA1 et/ou du module de contrôle esclave CTRL1.

Le module d'émission SND1 peut comprendre au moins une source optique de longueur d'onde fixe et prédéterminée. En variante ou complément, ce module d'émission peut comprendre, en plus, une source optique à longueur d'onde variable.

Le module d'émission SND1 peut également comprendre un aiguilleur optique assurant le routage de chaque signal optique émis vers un lien optique auquel le nœud est raccordé dans le réseau TWIN, en fonction de la longueur d'onde du signal optique. Un tel aiguilleur peut comprendre un diffuseur optique, un diviseur optique, un coupleur optique ou une combinaison de ces dispositifs.

Le module de réception RCV1 est configuré pour recevoir des signaux optiques selon au moins une longueur d'onde depuis au moins une liaison optique du réseau TWIN, pour extraire des données transportées par ces signaux optiques et pour transmettre les données extraites au module de traitement de données DATA1, ou au module de contrôle CTRL1.

Le nœud source 1S comprend par ailleurs un module de contrôle esclave CTRL1 connecté aux modules d'émission SND1 et de réception RCV1. Le module de contrôle esclave CTRL1 peut comprendre une pluralité d'unités de contrôle esclave, chaque unité de contrôle esclave étant dédiée au contrôle de l'émission des rafales de donnée à destination d'un nœud destinataire respectif. Chaque unité de contrôle esclave peut être couplée à une unité de réception configurée avec la longueur d'onde de contrôle d'un nœud destinataire respectif (par exemple le nœud 2D) et à une unité d'émission configurée avec la longueur d'onde de transfert.

Par ailleurs, le nœud destination 2D, émettant des messages de contrôle à destination du nœud source, comprend un module d'émission de signaux optiques SND2, un module de réception de signaux optiques RCV2, un module de traitement de données DATA2, et un module de contrôle maître CTRL2.

Le module d'émission SND2 est configuré pour émettre des signaux optiques sur au moins une liaison optique du réseau TWIN et selon au moins une longueur d'onde, à partir de données émanant du module de contrôle maître CTRL2.

Le module de réception RCV2 est configuré pour recevoir des signaux optiques selon au moins une longueur d'onde, depuis au moins une liaison optique du réseau TWIN, extraire des données transportées par ces signaux optiques et transmettre les données extraites au module de traitement de données DATA2, ou au module de contrôle CTRL2.

Le nœud destinataire 2D comprend par ailleurs un module de contrôle maître CTRL2 connecté aux modules d'émission SND2 et de réception RCV2.

Les module de réception RCV1, RCV2 peuvent comprendre une pluralité d'unités de détection (e.g. des photodétecteurs), chaque unité de détection étant adaptée pour capter un signal optique de longueur d'onde fixe et prédéterminée. En variante ou complément, les modules de réception RCV1, RCV2 peuvent comprendre une ou plusieurs unité(s) de détection à longueur d'onde variable.

Comme déjà dit, un nœud d'extrémité du réseau TWIN peut être à la fois source et destinataire ; un tel nœud d'extrémité comprend alors un module d'émission de signaux optiques, un module de réception de signaux optiques, un module de traitement de données, un module de contrôle esclave et un module de contrôle maître selon la description qui précède. Le module de traitement de données d'un tel nœud d'extrémité reçoit et émet des données, et les modules de contrôle esclave et maîtres sont tous deux connectés aux modules de réception et d'émission.

### Mode de réalisation de nœud intermédiaire

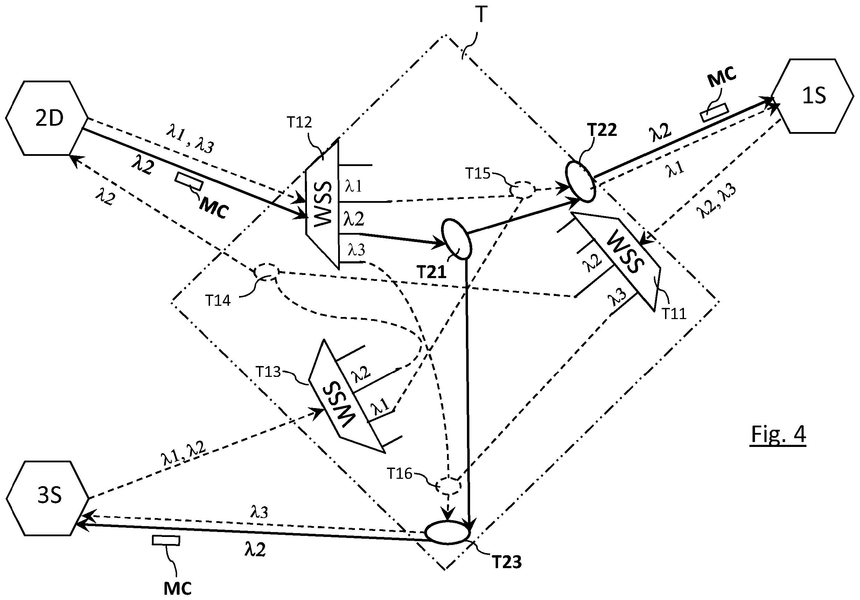

On se réfère maintenant à la **figure 4** qui illustre un nœud intermédiaire selon un mode de réalisation de l'invention.

La figure 4 représente en pointillés les arbres de transfert associés respectivement à chaque nœud 1S,2D,3S, en indiquant les longueurs d'onde utilisées pour le transport des rafales de données sur ces arbres de transfert. On notera ici que chaque nœud intermédiaire, adapté pour mettre en œuvre une commutation optique de rafale de données, est connecté à au moins deux liaisons optiques dans le réseau TWIN. Ainsi, dans l'exemple illustré, le nœud T est connecté au deux nœuds sources 1S et 3S ainsi qu'au nœud destinataire 2D. En outre, le nœud T peut être un nœud d'extrémité intégrant les fonctions d'un nœud intermédiaire.

Le nœud intermédiaire T comprend des moyens de routage optique T11 à T16 permettant d'acheminer, vers le nœud destinataire 2D, toute rafale de données transportée dans un signal optique émis par l'un des nœuds sources 1S,3S selon la longueur d'onde λ2.

Ces moyens de routage optique peuvent combiner des dispositifs sélectifs en longueur d'onde, par exemple des démultiplexeurs optiques ou des commutateurs sélectifs en longueur d'onde 1xN (appelés en anglais « Wavelength Selective Switch » et abrégé en WSS), désignés par T11 à T13, avec des coupleurs optiques, désignés par T14 à T16, typiquement sous la forme d'une structure de type « select and combine » (combinant WSS puis coupleurs). Ces moyens de routage optique servent ainsi à mettre en œuvre, de manière conventionnelle, le canal de transfert du sens feuilles vers racine des arbres de transfert associés aux nœuds 1S,2D et 3S.

Ces moyens de routage optique ne sont cependant pas adaptés à mettre en œuvre le canal de contrôle dans le sens racine vers feuille de l'arbre associé au nœud destinataire 2D, objet de l'invention, car les commutateurs sélectifs en longueur d'onde WSS 1xN n'ont pas la capacité de diffuser une longueur d'onde sur plus d'un port de sortie (voire deux ports pour certains éléments WSS dits « drop and continue »). De ce fait, la diffusion d'un canal de contrôle en direction de nœuds sources situés dans des directions différentes depuis le nœud T ne peut pas être réalisée.

Afin de mettre en œuvre le canal de contrôle dans le sens racine vers feuilles de l'arbre associé au nœud destinataire 2D, le nœud intermédiaire T comprend un système supplémentaire de diffusion (illustré en traits pleins sur la figure 4) prenant la forme de moyens de diffusion optiques configurés pour acheminer, vers les nœuds sources 1S et 3S, le message de contrôle MC transporté dans un signal optique émis par le nœud destinataire 2D selon la longueur d'onde λ2.

Ces moyens de diffusion optique peuvent notamment consister en un ensemble de coupleurs/diviseurs optiques T21 à T23 permettant la diffusion d'un signal optique émis selon la longueur d'onde λ2, du nœud destinataire 2D vers les nœuds sources 1S et 3S. En particulier, cet ensemble de coupleurs/diviseurs optiques T21 à T23 peut être connecté à un port de sortie vacant du WSS T12, dont le port d'entrée est connecté à une liaison optique venant du nœud destinataire 2D, et aux ports de sorties du nœud T en direction des nœuds sources 1S et 3S pour permettre de diffuser le canal de contrôle. Dans le cas où le WSS T12 n'a pas de port vacant, il est aussi possible d'utiliser un port occupé de ce WSS T12 en combinaison avec un filtrage (au moyen d'un filtre ou d'un démultiplexeur par exemple) pour sélectionner seulement le canal de contrôle.

En outre, pour permettre la transmission dans le plan de contrôle par un des nœuds sources, par exemple le nœud 1S, d'un message de requête MR transporté dans un signal optique émis selon la longueur d'onde λ1 dédiée à la réception de rafales par ce nœud 1S, le nœud intermédiaire T peut comprendre un autre système supplémentaire de diffusion (non-illustré sur la figure 4) prenant également la forme de moyens de diffusion optiques, similaires aux moyens de diffusion optiques discutés précédemment (i.e. sous forme d'un ensemble de coupleurs/diviseurs optiques), et configurés pour acheminer, en direction des nœuds sources 2D et 3S, tout message de contrôle MR émis par le nœud 1S sur la longueur d'onde λ1.

### Procédé de transmission dans le réseau TWIN

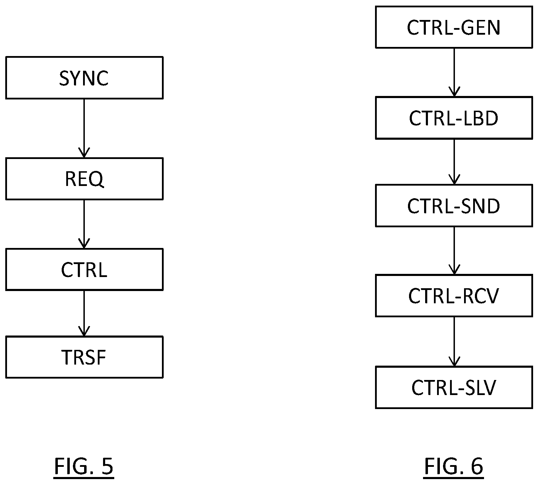

La **figure 5** illustre un mode de réalisation d'un procédé de transmission d'une rafale de données U depuis le nœud source 1S vers le nœud destinataire 2D.

Les nœuds 1S et 2D sont reliés par un canal de transfert comprenant un lien optique reliant les nœuds 1S et T, le nœud intermédiaire T, et un lien optique reliant les nœuds T et 2D. Les nœuds sources 1S et destination 2D sont également reliés par un canal de contrôle comprenant un lien optique reliant les nœuds 1S et T, le nœud intermédiaire T, et un lien optique reliant les nœuds T et 2D.

Dans une séquence référencée CTRL, le nœud destinataire 2D transmet un message de contrôle MC à chacun de ses nœuds sources 1S et 3S. De façon générale, le message de contrôle contient des informations contribuant à organiser la transmission de rafales de données vers le nœud destinataire 2D.

Dans une séquence référencée TRSF, le nœud source 1S transmet la rafale de données U après la réception du message de contrôle MC par le nœud source 1S (bien entendu, cette séquence est également réalisée par le nœud source 3S via un canal de transfert reliant les nœuds 3S et 2D si ce nœud source 3S a également une rafale de données à transmettre au nœud destinataire 2D).

En référence à la **figure 6****,** la séquence CTRL peut comprendre les étapes suivantes :
Dans une étape CTRL-GEN, le module de contrôle maître CTRL2 génère un message de contrôle MC.

Dans une étape CTRL-LBD, le module d'émission SND2 du nœud destinataire 2D détermine la longueur d'onde de contrôle λ2 associée au nœud destinataire 2D dans le plan de transfert.

Dans une étape CTRL-SND, le module d'émission SND2 du nœud destinataire 2D émet un signal optique selon la longueur d'onde de contrôle λ2 déterminée et transportant le message de contrôle MC généré.

Le message de contrôle MC est alors acheminé dans le réseau TWIN par le canal de contrôle selon l'arbre de contrôle associé au nœud 2D vers le nœud 1S, par l'intermédiaire du nœud T, lequel divise le signal optique émis par le nœud destinataire 2D en deux signaux optiques de même longueur d'onde λ2, l'un étant routé vers le nœud 1S, l'autre routé vers le nœud 3S.

Dans une étape CTRL-RCV, le module de réception RCV1 du nœud source 1S détecte le signal optique émis par le nœud 2D, extrait le message de contrôle MC et le transmet au module de contrôle esclave CTRL1.

Dans une étape CTRL-SLV, le module de contrôle esclave CTRL1 traite le message de contrôle MC, et déclenche l'exécution de la séquence TRSF en fonction du contenu du message de contrôle MC.

Bien entendu, les étapes CTRL-RCV et CTRL-SLV sont mises en œuvre de façon similaire par le nœud 3S lorsque ce nœud 3S a une rafale à transmettre au nœud 2D.

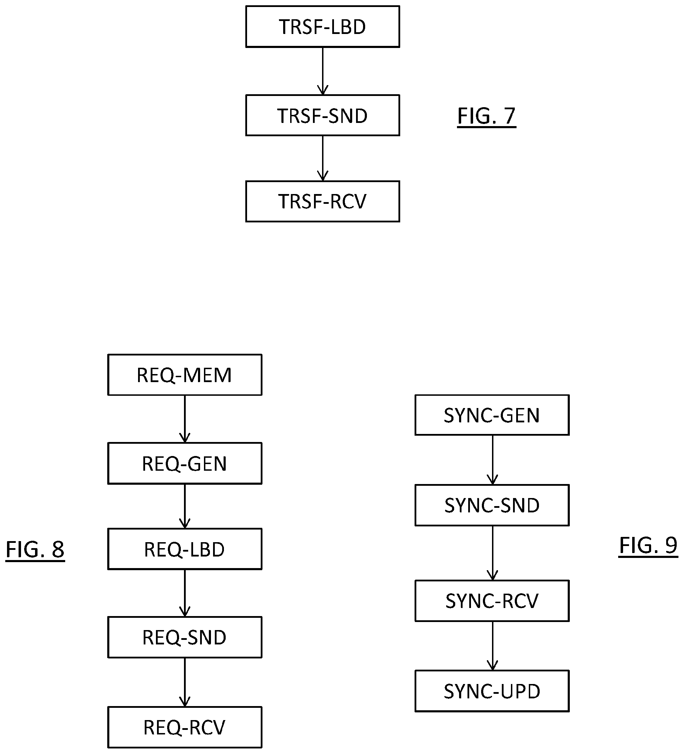

En référence à la **figure 7****,** la séquence TRSF comprend typiquement les étapes suivantes réalisées pour chacun des nœuds sources aptes à transmettre des rafales de données vers le nœud destinataire 2D (on prendra ici comme exemple le nœud 1S).

Dans une étape préliminaire TRSF-LBD, le module d'émission SND1 du nœud source 1S détermine la longueur d'onde de transfert λ2 attribuée au nœud 2D destinataire de la rafale U dans le plan de transfert.

Dans une étape TRSF-SND, le module d'émission SND1 du nœud source 1S génère un signal optique selon la longueur d'onde de transfert déterminée λ2 et transporte la rafale de données U à destination du nœud destinataire 2D, conformément à la technique TWIN.

Ce signal optique est alors acheminé dans le réseau TWIN par le canal de transfert reliant le nœud source 1S et le nœud destinataire 2D, de façon conventionnelle.

Dans une étape TRSF-RCV, le module de réception RCV2 du nœud destinataire 2D détecte le signal optique émis par le nœud 1S, extrait la rafale de données U qu'il transporte et la transmet au module de traitement de données DATA2.

Avec un tel procédé, aucune entité tierce de contrôle n'est nécessaire, et aucun équipement supplémentaire impliquant la mise en œuvre d'une conversion optique-électrique-optique n'est requis. Le procédé décrit peut être mise en œuvre pour toute rafale de données à transmettre depuis un quelconque nœud source vers un quelconque nœud destinataire du réseau TWIN.

### Modes de déclenchement de la transmission d'un message de contrôle

Dans un mode de réalisation, le message de contrôle MC est délivré par le nœud destinataire 2D suite à la réception d'une requête émanant d'un ou plusieurs nœuds source quelconques disposant d'une rafale de données destinée à ce nœud 2D, par exemple le nœud 1S, afin d'optimiser l'allocation des ressources optiques aux différents nœuds source.

Dans ce mode de réalisation, le module de contrôle esclave CTRL1 comprend alors une unité de stockage, par exemple une ou plusieurs mémoire(s) flash ou EEPROM, une horloge et un compteur de temps. Une séquence référencée REQ est alors réalisée avant la séquence CTRL de transmission du message de contrôle MC.

La **figure 8** illustre cette séquence REQ, qui peut comprendre les étapes suivantes :
Dans une étape REQ-MEM, le module de contrôle esclave CTRL1 du nœud source 1S reçoit du module de traitement de données DATA1 la rafale U à transmettre et la mémorise dans son unité de stockage.

Dans une étape REQ-GEN, le module de contrôle esclave CTRL1 du nœud source 1S génère un message de requête MR à destination du nœud destinataire 2D.

Ce message de requête MR contient notamment une indication qu'une rafale de données U est prête à être transmise au nœud 2D, ainsi que d'éventuelles autres informations telles que des éléments de QoS sur les données en attente de transmission, des informations sur les ressources souhaitées, etc.

Dans une étape REQ-LBD, le module d'émission SND1 du nœud source 1S détermine une longueur d'onde de requête à utiliser. Comme il a été vu précédemment, cette longueur d'onde de requête est avantageusement la longueur d'onde de transfert λ1 associée spécifiquement au nœud source 1S dans le plan de transfert.

Dans une étape REQ-SND, le module d'émission du nœud source 1S émet un signal optique selon la longueur d'onde de requête λ1 déterminée et transportant le message de requête MR.

Le signal optique transportant le message de requête MR est alors acheminé dans le réseau TWIN par le canal de contrôle reliant le nœud 1S et le nœud 2D, selon l'arbre de contrôle associé au nœud 1S

Dans une étape REQ-RCV, le module de réception du nœud destinataire 2D détecte ce signal optique, extrait le message de requête MR qu'il contient et le transmet au module de contrôle maître CTRL2 du nœud destinataire 2D.

Le message de contrôle MC est alors créé au cours de l'étape CTRL-GEN, en fonction des différents messages de requête MR reçus par le nœud destinataire 2D.

Dans la mesure où ce message de contrôle MC est un message d'autorisation d'émission, il comprend une information d'ordonnancement déterminée par le nœud destinataire 2D de sorte à éviter les collisions de rafales sur une même longueur d'onde, lorsqu'il y a plusieurs rafales de données transmises par plusieurs nœuds sources. Cette information d'ordonnancement peut être déterminée en fonction de requêtes d'émission MR reçues de différents nœuds sources, ainsi que du temps de propagation estimé entre les nœuds sources ayant émis ces requêtes et le nœud destinataire 2D.

Dans une variante de ce mode de réalisation, pendant l'étape REQ-LBD, le module d'émission SND1 du nœud source 1S détermine que la longueur d'onde de requête à utiliser est la longueur d'onde λ2 associée au nœud 2D, et le message de requête MR est ensuite transporté dans l'étape REQ-SND sur cette longueur d'onde λ2 déterminée, via un multiplexage temporel avec le plan de transfert transportant les données U.

Dans un autre mode de réalisation, le message de contrôle est délivré par le nœud destinataire spontanément (par exemple périodiquement) à chacun de ses nœuds sources dans le réseau TWIN.

Si le module d'émission du nœud destinataire 2D dispose d'autant d'unités d'émission que de nœuds sources dans le réseau aptes à transmettre des rafales de données à ce nœud destinataire 2D, la séquence CTRL de transmission du message de contrôle peut alors être réalisée en parallèle, pour chacun de ces nœuds sources via des unités d'émission respectives.

### Ordonnancement de rafales de données vers un même nœud destinataire

Dans un mode de réalisation, le message de contrôle MC comprend au moins une information d'ordonnancement, chaque information d'ordonnancement étant destinée à un nœud source apte à transmettre des rafales de données au nœud destinataire.

Cette information d'ordonnancement peut notamment consister en un intervalle de temps (désigné directement parmi un ensemble d'intervalles de temps prédéfinis ou en indiquant les instants de début et de fin de cet intervalle de temps) pendant lequel le nœud source est autorisé à émettre cette rafale de données vers le nœud destinataire.

Chaque information d'ordonnancement peut également comprendre un identifiant de nœud source unique dans le réseau. Par exemple, le nœud 2D étant destinataire des nœuds sources 1S, 3S, le message MC comprend alors une première information d'ordonnancement destinée au nœud 1S, dans laquelle est inséré un identifiant de ce nœud 1S, et une deuxième information d'ordonnancement destinée au nœud 3S, dans laquelle est insérée un identifiant de ce nœud 3S.

Ainsi, au cours de l'étape CTRL-SLV réalisée par le nœud 1S, le module de contrôle esclave CTRL1 peut alors opérer un filtrage du contenu du message de contrôle MC extrait, sur la base de la détection de cet identifiant de ce nœud source, et traiter sélectivement l'information d'ordonnancement comprenant l'identifiant unique associé au nœud 1S, et seulement celle-ci, en ignorant les autres informations d'ordonnancement concernant d'autres nœuds sources.

Au cours de l'étape CTRL-SLV réalisée ensuite par le nœud 1S, le module de contrôle esclave CTRL1 détermine le moment où émettre une rafale de données vers le nœud 2D, à partir de l'information d'ordonnancement reçue de ce nœud 2D.

Pour ce faire, le module de contrôle esclave du nœud 1S peut comprendre un compteur de temps, auquel cas ce compteur de temps est démarré pour une certaine durée en fonction de l'information d'ordonnancement reçue, de sorte à respecter l'intervalle de temps d'émission indiqué par le nœud 2D. Le module de contrôle esclave CTRL1 déclenche ensuite l'émission de la rafale U après expiration du compteur de temps.

Dans une variante de réalisation, l'information d'ordonnancement peut comprendre un intervalle de dates, et le délai d'attente être déterminé par le module de contrôle CTRL1 du nœud source 1S, de sorte que l'instant d'émission de la rafale de données U soit compris dans cet intervalle de dates.

Dans une autre variante de réalisation où les nœuds sources communiquent avec les nœuds destinataires par cycles de communication constitués de créneaux temporels, l'information d'ordonnancement peut comprendre au moins une référence de créneau temporel, désignant le créneau à utiliser pour l'émission de la rafale de données U. Dans ce cas, le nœud 1S effectue l'émission de cette rafale U au cours d'un prochain cycle, dans le(s) créneau(x) temporel(s) qui lui sont accordés par le nœud 2D.

Par exemple, supposons que le cycle de communication entre les nœuds sources 1S, 3S et le nœud destinataire 2D soit constitué de quatre créneaux temporels numérotés 1 à 4. La première information d'ordonnancement destinée au nœud 1S peut comprendre les références 1 et 2, et la deuxième information d'ordonnancement destinée au nœud 3S comprendre les références 3 et 4. Au cours d'un cycle de communication ultérieur, le nœud 1S peut alors transmettre des rafales de données vers le nœud 2D durant les créneaux temporels 1 et 2, tandis que le nœud 3S peut transmettre des rafales de données vers le nœud 2D au cours des créneaux 3 et 4.

Cette variante permet d'allouer à chaque nœud source des ressources temporelles à l'avance pour plus d'une rafale de données à transmettre, et de réduire le nombre de messages de requêtes transmis, ce qui permet d'économiser de la bande passante dans le plan de contrôle.

Quel que soit le type d'information d'ordonnancement choisie, il est avantageux que les instants d'émission de rafales au niveau de différents nœuds source à destination d'un même nœud destinataire tiennent compte des distances entre les nœuds sources et le nœud destinataire, qui peuvent être différentes. De ce fait, il est possible que des rafales puissent être émises en même temps par différents nœuds sources, mais que, du fait de temps de trajet différents, ces rafales soient transportées sur l'arbre de transfert sans chevauchement.

En particulier, l'instant d'émission d'une rafale de données peut être déterminé par le nœud destinataire à partir d'un temps de propagation dans le canal de transfert correspondant reliant ce nœud destinataire au nœud source émettant cette rafale.

### Synchronisation entre nœuds d'extrémité

Dans certaines configurations, il peut s'avérer nécessaire de synchroniser entre eux les nœuds sources émettant des rafales de données vers un même nœud destinataire, afin de mettre en œuvre de façon très précise l'ordonnancement décrit, voire les horloges en fréquence des différents nœuds destinataires.

Cette coordination implique plusieurs aspects :
- compensation des temps de propagation, afin d'éviter les contentions lors de l'émission d'une rafale de données, du fait que les distances entre un nœud destinataire et chacun de ses nœuds sources sont différentes.
- synchronisation entre les nœuds sources émettant vers un même nœud destinataire afin de partager une référence temporelle commune, nécessaire aux opérations d'ordonnancement.

La compensation des temps de propagation peut être réalisée à l'aide de procédés connus, par exemple, par la mise en œuvre d'un procédé de calcul du temps d'aller-retour accompagné éventuellement d'une calibration préalable, ou encore en utilisant des récepteurs GPS au niveau des nœuds d'extrémité.

Dans un mode de réalisation, une synchronisation des nœuds d'extrémité du réseau est mise en œuvre au moyen des canaux de contrôle décrits précédemment, et d'au moins un nœud destinataire qualifié de nœud « maître ».

Le module de contrôle de ce nœud destinataire maître comprend alors une unité de synchronisation, qui peut par exemple être une horloge interne de fréquence prédéterminée et générant une échelle de temps, ou bien être une interface de communication recevant des informations de synchronisation délivrées par une entité externe (non illustrée). Par ailleurs, le module de contrôle de chaque nœud source comprend au moins une unité d'asservissement.

Le procédé comprend alors une séquence supplémentaire SYNC de transmission d'un message de synchronisation, depuis le nœud destinataire vers chaque nœud source selon la longueur d'onde (de contrôle) attribuée au nœud destinataire dans le plan de transfert. Cette séquence SYNC peut avantageusement être effectuée avant les séquences REQ, CTRL et TRSF, après ces séquences, ou bien en parallèle.

La **figure 9** illustre une telle séquence SYNC.

Cette séquence SYNC comprend typiquement les étapes suivantes.
- Au niveau d'un nœud destinataire :
   - la génération (étape SYNC-GEN) par l'unité de synchronisation d'une référence temporelle, par exemple le début d'un cycle d'ordonnancement établi par le nœud destinataire,
   - l'émission (étape SYNC-SND), par le module d'émission du nœud destinataire d'un message de synchronisation contenant cette référence temporelle, dans un signal optique utilisant la longueur d'onde attribuée à ce nœud destinataire dans le plan de transfert,
- Au niveau de chaque nœud source :
   - la réception du message de synchronisation, l'extraction de la référence temporelle et la transmission de la référence temporelle à l'unité d'asservissement du nœud source (étape SYNC-RCV),
   - la mise à jour (étape SYNC-UPD) d'un cycle de communication, par le module d'asservissement de ce nœud source, à partir de la référence temporelle reçue, afin de régir les émissions de rafale de données ultérieures, de ce nœud source vers le nœud destinataire, selon ce cycle de communication mis à jour.

Le cycle de communication ainsi mis à jour est utilisé pour l'ordonnancement des rafales de données à destination du nœud maître. Cette séquence de synchronisation correspond à l'établissement d'une horloge temporelle associée au nœud destinataire et distribuée par celui-ci vers les nœuds sources, chaque horloge étant potentiellement totalement indépendante, c'est-à-dire que les débuts de cycles des différents nœuds destinataires ne sont pas nécessairement alignés. Ceci revient donc à réaliser un alignement en phase des nœuds source relativement à leur nœud destinataire maître, en tenant compte des temps de propagation. Dans ce mode de réalisation, un nœud source n'est pas synchronisé de façon absolue, mais relativement au nœud destinataire lui ayant fourni un message de synchronisation.

Dans un mode particulier de réalisation, un nœud source est apte à recevoir des messages de synchronisation émanant de plusieurs nœuds destinataires maîtres (et donc transmis selon plusieurs longueurs d'onde de contrôle différentes) et peut alors comprendre plusieurs unités d'asservissement, chaque unité d'asservissement maintenant un cycle de communication indépendant associé à un nœud destinataire maitre respectif. Dans ce mode de réalisation, chaque unité d'asservissement peut être connectée à une unité de détection respective, configurée pour recevoir des signaux optiques émis sur une longueur d'onde de contrôle associée à un nœud destinataire maître respectif.

En variante, les unités d'asservissement peuvent être connectées à un récepteur optique à longueur d'onde variable, configuré pour recevoir successivement des signaux optiques émis sur les différentes longueurs d'onde de contrôle des modules destinataires. Dans cette variante, la fréquence d'envoi par les nœuds destinataire des messages de synchronisation peut être limitée. Entre chaque mise à jour, dans le cas d'une distribution d'une synchronisation en fréquence commune à tous les nœuds extrémités, les cycles progressent au rythme de la fréquence commune distribuée par le réseau, auquel tous les nœuds extrémités ont accès.

Le basculement d'un nœud destinataire à l'autre est simplifié au niveau d'un nœud source, du fait de la synchronisation en fréquence commune, qui permet de maintenir facilement l'état de chaque cycle des nœuds destinataires.

Dans ces différents modes de réalisation, indépendamment de la synchronisation temporelle relative évoquée précédemment, les messages de contrôle peuvent être émis de sorte que leurs bits soient transmis selon un rythme de référence, ce rythme de référence étant destiné à être utilisé par les nœuds extrémités pour synchroniser en fréquence ces nœuds extrémités, comme expliqué précédemment. Le canal de contrôle, objet de la présente invention, peut alors servir pour transporter cette référence de synchronisation en fréquence.

Dans un mode de réalisation de réseau TWIN, chaque nœud d'extrémité est à la fois source, destinataire, et maître. Chaque nœud d'extrémité est alors apte à recevoir une référence de synchronisation en fréquence émanant de n'importe quel autre nœud d'extrémité du réseau, et comprend une unité de synchronisation et au moins une unité d'asservissement. Dans un autre mode de réalisation de réseau, chaque nœud d'extrémité est à la fois source et destinataire, un seul nœud d'extrémité est maître, et chaque nœud d'extrémité non-maître est configuré pour rediffuser la référence de synchronisation en fréquence reçue à ses nœuds sources, selon la longueur d'onde de contrôle correspondante.

La distribution des messages de synchronisation peut être assurée par le réseau (donc par les nœuds intermédiaires) en utilisant par exemple un protocole de couche physique, tel que le mécanisme « Synchronous Ethernet », sur le canal de contrôle objet de l'invention.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

En particulier, un mode de réalisation a été décrit dans lequel un nœud destinataire envoie à l'ensemble des nœuds sources qui lui sont associés, dans son arbre de transfert, un message de contrôle destiné à l'un de ses nœuds sources en particulier, les nœuds sources comprenant alors des moyens d'identification pour pouvoir filtrer les messages les concernant. Il peut être cependant également envisagé de ne transmettre ce message de contrôle qu'à un nombre restreint de ces nœuds sources, voire au seul nœud concerné, moyennant l'ajout de fonctions supplémentaires de routage dans le réseau optique, par exemple au niveau du nœud intermédiaire.

Par ailleurs, le canal de contrôle selon l'invention a été décrit comme servant à la transmission entre nœuds d'informations relatives à la transmission de rafales de données, que ce soit pour synchroniser les nœuds, gérer l'ordonnancement de leur émission ou requérir un accord quant à cette émission. Il est cependant également envisageable d'utiliser le principe de la présente invention pour transmettre, entre nœuds sources et destinataire de rafales du réseau, des messages de contrôle contenant des informations n'ayant pas nécessairement un lien avec l'émission proprement dite des rafales, comme par exemple des messages contenant des informations de gestion du réseau, des messages contenant des informations de QoS ou des messages contenant des informations statistiques relatives aux nœuds du réseau.

En outre, un nœud destinataire pour un premier arbre de transfert donné peut très bien être un nœud source dans un deuxième arbre de transfert associé à l'un des nœuds sources du premier arbre de transfert. Dans ce cas, il est envisageable d'utiliser le sens « racine vers feuille » de ce deuxième arbre de transfert pour réaliser un canal de contrôle allant du nœud source au nœud destinataire, ce qui permet d'avoir un canal bidirectionnel de contrôle entre ces deux nœuds, moyennant la coordination de l'émission des messages de contrôle dans ce sens afin d'éviter des collisions. L'architecture des nœuds peut alors être symétrique à l'architecture dans le sens « feuille vers racine », la transmission des messages de contrôle jusqu'au nœud source pouvant avantageusement mettre en œuvre un mécanisme supplémentaire pour garantir leur intégrité, comme par exemple un mécanisme de retransmission ou de coordination par les nœuds sources.

En particulier, dans le cas d'un arbre de transfert où les nœuds sources du plan de transfert émettent à longueur d'onde fixe, les plans de transfert et de contrôle étant inversés, il est avantageux de mettre en œuvre une gestion des messages de contrôle identique à celle mise en œuvre dans le plan de transfert pour une configuration normale où les nœuds sources émettent à des longueurs d'ondes accordables.

## Revendications

1. Procédé de transmission de données à travers un réseau optique à longueurs d'ondes entrelacées dans le domaine temporel, dit TWIN, le réseau optique comprenant une pluralité de nœuds optiques, dans lequel au moins une longueur d'onde (λ2) est dédiée à la transmission dans le réseau de rafales de données émises par au moins un desdits nœuds, dit nœud source (1S), à destination d'un desdits nœuds, dit nœud destinataire (2D),
le procédé étant **caractérisé en ce qu'**il comprend la transmission (CTRL) d'un message de contrôle (MC) depuis ledit nœud destinataire (2D) vers ledit au moins un nœud source (1S), le message de contrôle étant transporté dans un signal optique émis selon ladite longueur d'onde (λ2) dédiée à la transmission dans le réseau de rafales de données à destination dudit nœud destinataire.

2. Procédé selon la revendication 1, dans lequel le message de contrôle est un message d'autorisation d'émission d'une rafale (U) de données, le procédé comprenant en outre l'émission (TSRF) de ladite rafale de données, par ledit au moins un nœud source (1S) à destination du nœud destinataire (2D), dans un signal optique émis selon ladite longueur d'onde (λ2).

3. Procédé de transmission selon la revendication 2, dans lequel le message d'autorisation d'émission contient au moins une information d'ordonnancement déterminée par le nœud destinataire (2D), la rafale (U) de données étant émise par le nœud source (1S) à un instant déterminé par le nœud source (1S) à partir de l'information d'ordonnancement.

4. Procédé de transmission selon l'une des revendications 2 ou 3, comprenant en outre une étape de transmission (REQ) d'un message de requête (MR) du nœud source (1S) au nœud destinataire (2D), le message d'autorisation d'émission étant émis (CTRL-SND) par le nœud destinataire (2D) après réception (REQ-RCV) du message de requête (MR) par le nœud destinataire (2D).

5. Procédé de transmission selon la revendication 4, dans lequel le message de requête (MR) est transporté dans un signal optique émis (REQ-SND) par le nœud source (1S) selon une longueur d'onde (λ1) dédiée à la transmission de rafales (U) de données à destination du nœud source (1S) dans le réseau (TWIN).

6. Procédé de transmission selon l'une des revendications 1 à 5, dans lequel la longueur d'onde (λ2) est dédiée à la transmission dans le réseau de rafales de données émises par une pluralité de nœuds source (1S,3S), et dans lequel le message de contrôle (MC) est un message de synchronisation comprenant une référence temporelle déterminée par le nœud destinataire (2D) pour synchroniser les transmissions de rafales de données depuis lesdits nœuds sources (1S, 3S) vers le nœud destinataire (2D).

7. Procédé de transmission selon l'une des revendications 1 à 6, dans lequel le message de contrôle comprend une pluralité de bits, le message de contrôle étant émis de sorte que lesdits bits soient porteurs d'un rythme de référence destiné à être utilisé par ledit au moins un nœud source.

8. Nœud optique (2D), dit nœud destinataire, pour un réseau optique à longueurs d'ondes entrelacées dans le domaine temporel, dit TWIN,
le réseau comprenant une pluralité de nœuds optiques, dans lequel au moins une longueur d'onde (λ2) est dédiée à la transmission dans le réseau de rafales de données émises par au moins un desdits nœuds, dit nœud source (1S), à destination dudit nœud destinataire,
le nœud destinataire comprenant un module de réception (RCV1, RCV2) de signaux optiques apte à recevoir lesdites rafales de données,
le nœud destinataire étant **caractérisé en ce qu'**il comprend un module d'émission (SND2) de signaux optiques, configuré pour émettre un message de contrôle (MC) vers ledit au moins un nœud source (1S), le message de contrôle étant transporté dans un signal optique émis selon ladite longueur d'onde (λ2) dédiée à la transmission dans le réseau de rafales de données à destination dudit nœud destinataire.

9. Nœud optique (1S), dit nœud source, pour un réseau optique à longueurs d'ondes entrelacées dans le domaine temporel, dit TWIN,
le réseau comprenant une pluralité de nœuds optiques, dans lequel au moins une longueur d'onde (λ2) est dédiée à la transmission dans le réseau de rafales de données émises par ledit nœud source à destination d'un desdits nœuds, dit nœud destinataire (1S),
le nœud source comprenant un module d'émission (SND1) de signaux optiques apte à émettre des rafales de données vers ledit nœud destinataire selon ladite longueur d'onde (λ2),
le nœud source étant **caractérisé en ce qu'**il comprend un module de réception (RCV1) de signaux optiques apte à recevoir un message de contrôle (MC) provenant dudit nœud destinataire, le message de contrôle étant transporté dans un signal optique émis selon ladite longueur d'onde (λ2) dédiée à la transmission dans le réseau de rafales de données à destination dudit nœud destinataire.

10. Nœud source (1S) selon la revendication 9, dans lequel le module d'émission (SND1) est configuré en outre pour émettre vers le nœud destinataire (2D) un message de requête (MR) agencé pour déclencher l'émission du message de contrôle (MC) par le nœud destinataire.

11. Nœud optique (T), dit nœud intermédiaire, pour un réseau optique à longueurs d'ondes entrelacées dans le domaine temporel, dit TWIN, comprenant une pluralité de nœuds optiques, dans lequel au moins une longueur d'onde (λ2) est dédiée à la transmission dans le réseau de rafales de données émises par au moins un desdits nœuds, dit nœud source (1S,3S), à destination d'un desdits nœuds, dit nœud destinataire (2D),
le nœud intermédiaire comprenant des moyens de routage optique (T11,T12,T13,T14,T15,T16) configurés pour acheminer vers le nœud destinataire une rafale de données transportée dans un signal optique émis par un nœud source selon ladite longueur d'onde (λ2),
le nœud intermédiaire étant **caractérisé en ce qu'**il comprend en outre des premiers moyens de diffusion optique (T21,T22,T23) configurés pour acheminer vers ledit au moins un nœud source un message de contrôle (MC) transporté dans un signal optique émis par le nœud destinataire selon ladite longueur d'onde (λ2).

12. Nœud intermédiaire selon la revendication 11, comprenant en outre des deuxièmes moyens d'aiguillage configurés pour acheminer vers le nœud destinataire (2D) un message de requête (MR) transporté dans un signal optique émis par un nœud source (1S) selon une longueur d'onde (λ1) dédiée à la transmission de rafales de données à destination dudit nœud source (1S) dans le réseau.

13. Réseau optique à longueurs d'ondes entrelacées dans le domaine temporel, dit TWIN, comprenant une pluralité de nœuds optiques, dans lequel au moins une longueur d'onde (λ2) est dédiée à la transmission dans le réseau de rafales de données émises par au moins un desdits nœuds, dit nœud source (1S), à destination d'un desdits nœuds, dit nœud destinataire (2D), le réseau optique comprenant au moins un canal de transfert configuré pour acheminer lesdites rafales de données depuis ledit au moins un nœud source (1S) vers ledit nœud destinataire (2D),
le réseau optique étant **caractérisé en ce qu'**il comprend en outre au moins un canal de contrôle configuré pour acheminer au moins un message de contrôle (MC) depuis le nœud destinataire (2D) vers ledit au moins un nœud source (1S) au moyen d'un signal optique émis selon une longueur d'onde (λ2) dédiée à la transmission de rafales de données à destination du nœud destinataire (2D).

14. Réseau optique (TWIN) selon la revendication 13, dans lequel le canal de contrôle est par ailleurs configuré pour acheminer des signaux optiques transportant des messages de requête depuis le nœud source (1S) vers le nœud destinataire (2D) selon une longueur d'onde (λ1) dédiée à la transmission de rafales de données à destination dudit nœud source (1S) dans le réseau.

15. Réseau optique selon l'une des revendications 13 ou 14, comprenant en outre au moins un nœud intermédiaire (T), appartenant au canal de transfert et au canal de contrôle, apte à recevoir le signal optique transportant le message de contrôle en provenance du nœud destinataire (2D) et configuré pour acheminer ledit signal optique vers ledit au moins un nœud source (1S,3S).

## Patentansprüche

1. Verfahren zur Datenübertragung über ein optisches Netz mit verschachtelten Wellenlängen im Zeitbereich, TWIN genannt, wobei das optische Netz eine Vielzahl optischer Knoten enthält, wobei mindestens eine Wellenlänge (λ2) der Übertragung im Netz von Daten-Bursts dediziert ist, die von mindestens einem der Knoten, Quellenknoten (1S) genannt, an einen der Knoten, Zielknoten (2D) genannt, gesendet werden,
wobei das Verfahren **dadurch gekennzeichnet ist, dass** es die Übertragung (CTRL) einer Steuernachricht (MC) vom Zielknoten (2D) an den mindestens einen Quellenknoten (1S) enthält, wobei die Steuernachricht in einem optischen Signal befördert wird, das gemäß der Wellenlänge (λ2) gesendet wird, die der Übertragung im Netz von Daten-Bursts an den Zielknoten dediziert ist.

2. Verfahren nach Anspruch 1, wobei die Steuernachricht eine Sendegenehmigungsnachricht eines Daten-Bursts (U) ist, wobei das Verfahren außerdem das Senden (TSRF) des Daten-Bursts durch den mindestens einen Quellenknoten (1S) an den Zielknoten (2D) in einem optischen Signal enthält, das gemäß der Wellenlänge (λ2) gesendet wird.

3. Übertragungsverfahren nach Anspruch 2, wobei die Sendegenehmigungsnachricht mindestens eine vom Zielknoten (2D) bestimmte Ablaufplanungsinformation enthält, wobei der Daten-Burst (U) vom Quellenknoten (1S) zu einem Zeitpunkt gesendet wird, der vom Quellenknoten (1S) ausgehend von der Ablaufplanungsinformation bestimmt wird.

4. Übertragungsverfahren nach einem der Ansprüche 2 oder 3, das außerdem einen Schritt der Übertragung (REQ) einer Anforderungsnachricht (MR) vom Quellenknoten (1S) an den Zielknoten (2D) enthält, wobei die Sendegenehmigungsnachricht vom Zielknoten (2D) nach Empfang (REQ-RCV) der Anforderungsnachricht (MR) durch den Zielknoten (2D) gesendet wird.

5. Übertragungsverfahren nach Anspruch 4, wobei die Anforderungsnachricht (MR) in einem vom Quellenknoten (1S) gesendeten optischen Signal (REQ-SND) gemäß einer Wellenlänge (λ1) befördert wird, die der Übertragung von Daten-Bursts (U) an den Quellenknoten (1S) im Netz (TWIN) dediziert ist.

6. Übertragungsverfahren nach einem der Ansprüche 1 bis 5, wobei die Wellenlänge (λ2) der Übertragung im Netz von Daten-Bursts dediziert ist, die von einer Vielzahl von Quellenknoten (1S, 3S) gesendet werden, und wobei die Steuernachricht (MC) eine Synchronisationsnachricht ist, die einen vom Zielknoten (2D) bestimmten Zeitbezug enthält, um die Übertragungen von Daten-Bursts von den Quellenknoten (1S, 3S) zum Zielknoten (2D) zu synchronisieren.

7. Übertragungsverfahren nach einem der Ansprüche 1 bis 6, wobei die Steuernachricht eine Vielzahl von Bits enthält, wobei die Steuernachricht so gesendet wird, dass die Bits Träger eines Bezugstakts sind, der dazu bestimmt ist, von dem mindestens einen Quellenknoten verwendet zu werden.

8. Optischer Knoten (2D), Zielknoten genannt, für ein optisches Netz mit verschachtelten Wellenlängen im Zeitbereich, TWIN genannt, wobei das Netz eine Vielzahl optischer Knoten enthält, wobei mindestens eine Wellenlänge (λ2) der Übertragung im Netz von Daten-Bursts dediziert ist, die von mindestens einem der Knoten, Quellenknoten (1S) genannt, an den Zielknoten gesendet werden,
wobei der Zielknoten ein Empfangsmodul (RCV1, RCV2) optischer Signale enthält, das geeignet ist, die Daten-Bursts zu empfangen,
wobei der Zielknoten **dadurch gekennzeichnet ist, dass** er ein Sendemodul (SND2) optischer Signale enthält, das konfiguriert ist, eine Steuernachricht (MC) an den mindestens einen Quellenknoten (1S) zu senden, wobei die Steuernachricht in einem optischen Signal befördert wird, das gemäß der Wellenlänge (λ2) gesendet wird, die der Übertragung im Netz von Daten-Bursts an den Zielknoten dediziert ist.

9. Optischer Knoten (1S), Quellenknoten genannt, für ein optisches Netz mit verschachtelten Wellenlängen im Zeitbereich, TWIN genannt, wobei das Netz eine Vielzahl optischer Knoten enthält, wobei mindestens eine Wellenlänge (λ2) der Übertragung im Netz von Daten-Bursts dediziert ist, die vom Quellenknoten an einen der Knoten, Zielknoten genannt (1S), gesendet werden,
wobei der Quellenknoten ein Sendemodul (SND1) optischer Signale enthält, das geeignet ist, Daten-Bursts an den Zielknoten gemäß der Wellenlänge (λ2) zu senden,
wobei der Quellenknoten **dadurch gekennzeichnet ist, dass** er ein Empfangsmodul (RCV1) optischer Signale enthält, das geeignet ist, eine vom Zielknoten kommende Steuernachricht (MC) zu empfangen, wobei die Steuernachricht in einem optischen Signal befördert wird, das gemäß der Wellenlänge (λ2) gesendet wird, die der Übertragung im Netz von Daten-Bursts an den Zielknoten dediziert ist.

10. Quellenknoten (1S) nach Anspruch 9, wobei das Sendemodul (SND1) außerdem konfiguriert ist, an den Zielknoten (2D) eine Anforderungsnachricht (MR) zu senden, die eingerichtet ist, das Senden der Steuernachricht (MC) durch den Zielknoten auszulösen.

11. Optischer Knoten (T), Zwischenknoten genannt, für ein optisches Netz mit verschachtelten Wellenlängen im Zeitbereich, TWIN genannt, das eine Vielzahl optischer Knoten enthält, wobei mindestens eine Wellenlänge (λ2) der Übertragung im Netz von Daten-Bursts dediziert ist, die von mindestens einem der Knoten, Quellenknoten (1S, 3S) genannt, an einen der Knoten, Zielknoten (2D) genannt, gesendet werden,
wobei der Zwischenknoten optische Routingeinrichtungen (T11,T12,T13,T14,T15,T16) enthält, die konfiguriert sind, einen Daten-Burst zum Zielknoten weiterzuleiten, der in einem optischen Signal befördert wird, das von einem Quellenknoten gemäß der Wellenlänge (λ2) gesendet wird,
wobei der Zwischenknoten **dadurch gekennzeichnet ist, dass** er außerdem erste Einrichtungen zur optischen Streuung (T21,T22,T23) enthält, die konfiguriert sind, zu dem mindestens einen Quellenknoten eine Steuernachricht (MC) weiterzuleiten, die in einem optischen Signal befördert wird, das vom Zielknoten gemäß der Wellenlänge (λ2) gesendet wird.

12. Zwischenknoten nach Anspruch 11, der außerdem zweite Umleitungseinrichtungen enthält, die konfiguriert sind, eine Anforderungsnachricht (MR) zum Zielknoten (2D) weiterzuleiten, die in einem optischen Signal befördert wird, das von einem Quellenknoten (1S) gemäß einer Wellenlänge (λ1) gesendet wird, die der Übertragung von Daten-Bursts an den Quellenknoten (1S) im Netz dediziert ist.

13. Optisches Netz mit verschachtelten Wellenlängen im Zeitbereich, TWIN genannt, das eine Vielzahl optischer Knoten enthält, wobei mindestens eine Wellenlänge (λ2) der Übertragung im Netz von Daten-Bursts dediziert ist, die von mindestens einem der Knoten, Quellenknoten (1S) genannt, an einen der Knoten, Zielknoten (2D) genannt, gesendet werden, wobei das optische Netz mindestens einen Übertragungskanal enthält, der konfiguriert ist, die Daten-Bursts von dem mindestens einen Quellenknoten (1S) zum Zielknoten (2D) weiterzuleiten,
wobei das optische Netz **dadurch gekennzeichnet ist, dass** es außerdem mindestens einen Steuerkanal enthält, der konfiguriert ist, mindestens eine Steuernachricht (MC) vom Zielknoten (2D) zum mindestens einen Quellenknoten (1S) mittels eines optischen Signals weiterzuleiten, das gemäß einer Wellenlänge (λ2) gesendet wird, die der Übertragung von Daten-Bursts an den Zielknoten (2D) dediziert ist.

14. Optisches Netz (TWIN) nach Anspruch 13, wobei der Steuerkanal außerdem konfiguriert ist, Anforderungsnachrichten befördernde optische Signale vom Quellenknoten (1S) zum Zielknoten (2D) gemäß einer Wellenlänge (λ1) weiterzuleiten, die der Übertragung von Daten-Bursts an den Quellenknoten (1S) im Netz dediziert ist.

15. Optisches Netz nach einem der Ansprüche 13 oder 14, das außerdem mindestens einen Zwischenknoten (T) enthält, der zum Übertragungskanal und zum Steuerkanal gehört, der geeignet ist, das die vom Zielknoten (2D) kommende Steuernachricht befördernde optische Signal zu empfangen, und konfiguriert ist, das optische Signal zum mindestens einen Quellenknoten (1S, 3S) weiterzuleiten.

## Claims

1. Method for transmitting data through an optical time-domain wavelength interleaved network, referred to as a TWIN, the optical network comprising a plurality of optical nodes, in which at least one wavelength (λ2) is dedicated to the transmission in the network of bursts of data transmitted by at least one of said nodes, called source node (1S), to one of said nodes, called destination node (2D),
the method being **characterized in that** it comprises the transmission (CTRL) of a control message (MC) from said destination node (2D) to said at least one source node (1S), the control message being transported in an optical signal transmitted at said wavelength (λ2) dedicated to the transmission in the network of bursts of data to said destination node.

2. Method according to Claim 1, in which the control message is a message authorizing the transmission of a burst (U) of data, the method further comprising the transmission (TSRF) of said burst of data, by said at least one source node (1S) to the destination node (2D), in an optical signal transmitted at said wavelength (λ2).

3. Transmission method according to Claim 2, in which the transmission authorization message contains at least one item of scheduling information determined by the destination node (2D), the burst (U) of data being transmitted by the source node (1S) at a time determined by the source node (1S) based on the item of scheduling information.

4. Transmission method according to one of Claims 2 and 3, further comprising a step of transmitting (REQ) a request message (MR) from the source node (1S) to the destination node (2D), the transmission authorization message being transmitted (CTRL-SND) by the destination node (2D) after reception (REQ-RCV) of the request message (MR) by the destination node (2D).

5. Transmission method according to Claim 4, in which the request message (MR) is transported in an optical signal transmitted (REQ-SND) by the source node (1S) at a wavelength (λ1) dedicated to the transmission of bursts (U) of data to the source node (1S) in the network (TWIN).

6. Transmission method according to one of Claims 1 to 5, in which the wavelength (λ2) is dedicated to the transmission in the network of bursts of data transmitted by a plurality of source nodes (1S, 3S), and in which the control message (MC) is a synchronization message comprising a time reference determined by the destination node (2D) for synchronizing the transmissions of bursts of data from said source nodes (1S, 3S) to the destination node (2D).

7. Transmission method according to one of Claims 1 to 6, in which the control message comprises a plurality of bits, the control message being transmitted so that said bits carry a reference rate intended to be used by said at least one source node.

8. Optical node (2D), called destination node, for an optical time-domain wavelength interleaved network, referred to as a TWIN, the network comprising a plurality of optical nodes, in which at least one wavelength (λ2) is dedicated to the transmission in the network of bursts of data transmitted by at least one of said nodes, called source node (1S), to said destination node, the destination node comprising a module for receiving (RCV1, RCV2) optical signals which is capable of receiving said bursts of data, the destination node being **characterized in that** it comprises a module for transmitting (SND2) optical signals, configured to transmit a control message (MC) to said at least one source node (1S), the control message being transported in an optical signal transmitted at said wavelength (λ2) dedicated to the transmission in the network of bursts of data to said destination node.

9. Optical node (1S), called source node, for an optical time-domain wavelength interleaved network, referred to as a TWIN, the network comprising a plurality of optical nodes, in which at least one wavelength (λ2) is dedicated to the transmission in the network of bursts of data transmitted by said source node to one of said nodes, called destination node (1S),
the source node comprising a module for transmitting (SND1) optical signals which is capable of transmitting bursts of data to said destination node at said wavelength (λ2), the source node being **characterized in that** it comprises a module for receiving (RCV1) optical signals which is capable of receiving a control message (MC) from said destination node, the control message being transported in an optical signal transmitted at said wavelength (λ2) dedicated to the transmission in the network of bursts of data to said destination node.

10. Source node (1S) according to Claim 9, in which the
transmission module (SND1) is further configured to transmit to the destination node (2D) a request message (MR) designed to trigger the transmission of the control message (MC) by the destination node.

11. Optical node (T), called intermediate node, for an optical time-domain wavelength interleaved network, referred to as a TWIN, comprising a plurality of optical nodes, in which at least one wavelength (λ2) is dedicated to the transmission in the network of bursts of data transmitted by at least one of said nodes, called source node (1S,3S), to one of said nodes, called destination node (2D),
the intermediate node comprising optical routing means (T11, T12, T13, T14, T15, T16) configured to route to the destination node a burst of data transported in an optical signal transmitted by a source node at said wavelength (λ2),
the intermediate node being **characterized in that** it further comprises first optical broadcasting means (T21, T22, T23) configured to route to said at least one source node a control message (MC) transported in an optical signal transmitted by the destination node at said wavelength (λ2).

12. Intermediate node according to Claim 11, further
comprising second routing means configured to route to the destination node (2D) a request message (MR) transported in an optical signal transmitted by a source node (1S) at a wavelength (A1) dedicated to the transmission of bursts of data to said source node (1S) in the network.

13. Optical time-domain wavelength interleaved network,
referred to as a TWIN, comprising a plurality of optical nodes, in which at least one wavelength (λ2) is dedicated to the transmission in the network of bursts of data transmitted by at least one of said nodes, called source node (1S), to one of said nodes, called destination node (2D), the optical network comprising at least one transfer channel configured to route said bursts of data from said at least one source node (1S) to said destination node (2D),
the optical network being **characterized in that** it further comprises at least one control channel configured to route at least one control message (MC) from the destination node (2D) to said at least one source node (1S) by means of an optical signal transmitted at a wavelength (λ2) dedicated to the transmission of bursts of data to the destination node (2D).

14. Optical network (TWIN) according to Claim 13, in which the control channel is further configured to route optical signals carrying request messages from the source node (1S) to the destination node (2D) at a wavelength (λ1) dedicated to the transmission of bursts of data to said source node (1S) in the network.

15. Optical network according to one of Claims 13 and 14, further comprising at least one intermediate node (T), belonging to the transfer channel and to the control channel, capable of receiving the optical signal carrying the control message from the destination node (2D) and configured to route said optical signal to said at least one source node (1S, 3S).
